# EUROPÄISCHE PATENTANMELDUNG

(11) **EP 0 859 348 A2**
(43) Veröffentlichungstag der Anmeldung: **19.08.1998**
(21) Anmeldenummer: 97120934.1
(22) Anmeldetag: 28.11.1997
(51) Int. Cl.: G09F 9/00, G09F 13/00

(54) **Gehäuse oder dergleichen**

(30) Priorität: 17.02.1997 DE 19706091
(71) Anmelder: MAN Technologie AG, 86153 Augsburg (DE)
(72) Erfinder: Schurrer, Josef, 82041 Deisenhofen (DE)
(74) Vertreter: Grape, Knut, Dipl.-Ing.

(57) **Zusammenfassung**

Die Erfindung betrifft ein Gehäuse oder dergleichen, insbesondere zur Aufnahme einer Displayanordnung zum Anzeigen von Informationen, mit einem aus mehreren Gehäuseelementen (14) gebildeten Gehäusekörper (12), in welchem die Displayanordnung aufnehmbar ist, und wenigstens einem transparenten Sichtprofil (18, 18'), welchem eine für einen Betrachter von außen sichtbare Anzeigeeinrichtung der Displayanordnung zugewandt ist, wobei das transparente Sichtprofil (18, 18') Außenabmessungen aufweist, welche in Form und Größe im wesentlichen an Innenabmessungen von einen Rahmen (16) oder dergleichen bildenden Gehäuseelementen (14) des Gehäusekörpers (12) angepaßt sind, und über die der Anzeigeeinrichtung der Displayanordnung zugewandte Innenfläche (24) an einem insbesondere umlaufenden Anschlag (26) oder dergleichen Vorsprung, der sich von den Innenseiten (22) der den Rahmen (16) bildenden Gehäuseelemente (14) wegerstreckt, abstützbar gehalten ist, derart, daß die Stirnseiten (28) der den Rahmen (16) bildenden Gehäuseelemente (14) mit der der Anzeigeeinrichtung der Displayanordnung abgewandten Außenfläche (30) des transparenten Sichtprofiles (18, 18') im wesentlichen bündig abschließen oder geringfügig über die der Anzeigeeinrichtung der Displayanordnung abgewandte Außenfläche (30) vorstehen.

## Beschreibung

Die Erfindung betrifft ein Gehäuse oder dergleichen, insbesondere zur Aufnahme einer Displayanordnung zum Anzeigen von Informationen.

Derartige Gehäuse sind allgemein bekannt. So sind derartige Gehäuse für Informationsanzeiger häufig im unter anderem öffentlichen Personenverkehr anzutreffen. Diese Gehäuse umfassen derzeit einen aus mehreren Gehäuseelementen gebildeten Gehäusekörper, in welchem die Displayanordnung aufnehmbar ist, und wenigstens ein transparentes Sichtprofil, welchem eine für einen Betrachter von außen sichtbare Anzeigeeinrichtung der Displayanordnung, zum Beispiel in Form von Leuchtdioden oder Faltblattelementen, zugewandt ist. Das transparente Sichtprofil ist als Glasscheibe ausgebildet, die in einen Türrahmen mit einer im Querschnitt etwa H-förmigen Montagedichtung oder dergleichen aus elastischem Material eingesetzt ist. An dem Türrahmen sind für dessen zusätzliche Verschwenkbarkeit Scharniere und Verschlüsse zu Montage-, Reparatur-, Wartungs- oder Reinigungszwecken angeordnet. Der Türrahmen weist dabei einen umlaufenden Rand von ungefähr 30 bis 100 mm Breite auf, um das transparente Sichtprofil stabil aufnehmen zu können. Aufgrund dieses verhältnismäßig breiten Randes des Türrahmens ist allerdings die Sichtfläche des transparenten Sichtprofiles verkleinert. Darüber hinaus bietet dieser umlaufende Rand einem Dritten eine gute Angriffsmöglichkeit, um sich unsachgemäß am Rand und damit am Türrahmen selbst festzuhalten und hochzuziehen etc. Eine solche unsachgemäße äußere Einwirkung aber führt wiederum in aller Regel zu erheblichen Beschädigungen des gesamten Gehäuses. Schließlich ist dieses Gehäuse in seiner Bauweise infolge von dessen konstruktiver Ausgestaltung insgesamt relativ aufwendig.

Ausgehend vom Stand der Technik liegt der Erfindung die Aufgabe zugrunde, ein Gehäuse oder dergleichen, insbesondere zur Aufnahme einer Displayanordnung zum Anzeigen von Informationen, zur Verfügung zu stellen, welches unter anderem die vorgenannten Nachteile vermindert bzw. beseitigt, mithin eine größstmögliche Sichtfläche aufweist, eine unsachgemäße Manipulation durch Dritte von außen einfach und zuverlässig erschwert bzw. ausschließt sowie zugleich konstruktiv besonders einfach ausgestaltet ist.

Diese Aufgabe wird auf überrraschend einfache Weise durch die Merkmale des Anspruchs 1 gelöst.

Durch die erfindungsgemäße Ausbildung des Gehäuses oder dergleichen, insbesondere zur Aufnahme einer Displayanordnung zum Anzeigen von Informationen, mit einem transparenten Sichtprofil, das Außenabmessungen aufweist, welche in Form und Größe im wesentlichen an Innenabmessungen von einen Rahmen oder dergleichen bildenden Gehäuseelementen des Gehäusekörpers angepaßt sind, und über die der Anzeigeeinrichtung der Displayanordnung zugewandte Innenfläche an einem insbesondere durchgehenden bzw. umlaufenden Anschlag oder dergleichen Vorsprung, der sich von den Innenseiten der den Rahmen bildenden Gehäuseelemente wegerstreckt, abstützbar gehalten ist, derart, daß die Stirnseiten der den Rahmen bildenden Gehäuseelemente mit der der Anzeigeeinrichtung der Displayanordnung abgewandten Außenfläche des transparenten Sichtprofiles im wesentlichen bündig abschließen oder geringfügig über die der Anzeigeeinrichtung der Displayanordnung abgewandte Außenfläche vorstehen, läßt sich eine größstmögliche Sichtfläche zum Anzeigen von Informationen erreichen. So wird das transparente Sichtprofil und damit einhergehend die Sichtfläche bis an die Innenseiten der den Rahmen bildenden Gehäuseelemente vergrößert, der sichtbare Rahmen mithin im wesentlichen auf die Dickenabmessung der den Rahmen bildenden Gehäuseelemente, zum Beispiel von kleiner bzw. gleich 15 mm, reduziert. Dies bringt zugleich den Vorteil mit sich, den optischen Eindruck des erfindungsgemäßes Gehäuses zu verbessern. Demnach entsteht für einen Betrachter aufgrund der Verminderung der Breite des Rahmens der optische Eindruck, daß die gesamte Sichtfläche aus dem transparenten Sichtprofil selbst besteht. Des weiteren ist durch die konstruktive Bauweise des erfindungsgemäßen Gehäuses mit einem transparenten Sichtprofil über nahezu die gesamte Sichtfläche, welches bis an die Innenseiten der den Rahmen bildenden Gehäuseelemente heranreicht und dessen Außenfläche nahezu bündig mit den Stirnseiten der Gehäuseelemente abschließt, eine unsachgemäße Manipulation durch Dritte von außen einfach und zuverlässig erschwert bzw. gänzlich ausgeschlossen. Schließlich läßt sich durch die erfindungsgemäße Ausgestaltung auch ein Gehäuse erhalten, das konstruktiv ausgesprochen einfach und kompakt ausgebildet ist.

Weitere vorteilhafte Einzelheiten des erfindungsgemäßen Gehäuses sind in den Ansprüchen 2 bis 11 beschrieben.

Durch die konstruktiven Maßnahmen nach Anspruch 2, das transparente Sichtprofil an den den Rahmen bildenden Gehäuseelementen verschwenkbar anzuordnen, ist neben einer vereinfachten Bauweise des Gehäuses nach der Erfindung zugleich eine gute Zugänglichkeit zu dessen Innerem sichergestellt. Auf diese Weise ist es möglich, das Gehäuse zu Montage-, Reparatur- und Wartungszwecken der Displayanordnung oder Reinigungszwecken des transparenten Sichtprofiles zu öffnen und zu schließen.

Von besonderer Bedeutung für eine Vergrößerung der Sichtfläche des transparenten Sichtprofiles des erfindungsgemäßen Gehäuses sind die Maßnahmen des Anspruchs 3, wonach die den Rahmen bildenden Gehäuseelemente in einer gemeinsamen Teilungsebene etwa senkrecht zu den Gehäuseelementen und benachbart zu dem transparenten Sichtprofil zweigeteilt und über wenigstens ein Scharnier oder dergleichen Gelenkverbindung relativ zueinander verschwenkbar ausgebildet sind. Dabei ist das transparente Sichtprofil über die Innenfläche im randseitigen Bereich an dem umlaufenden Anschlag oder dergleichen Vorsprung mittels Verklebung befestigbar. Durch eine solche Verklebung erhält das transparente Sichtprofil eine zusätzliche Stabilität, was wiederum einen sogenannten Mittrageeffekt des transparenten Sichtprofiles bewirkt, so daß eine Verkleinerung des Rahmens ohne weiteres möglich ist. Zudem läßt sich durch eine solche Verklebung gleichzeitig der Aufwand zur Herstellung und Montage des erfindungsgemäßen Gehäuses ganz erheblich reduzieren.

Entsprechend den Merkmalen des Anspruchs 4 ist vorzugsweise eine Dichtung in der gemeinsamen Teilungsebene zwischen den zweigeteilten, den Rahmen bildenden Gehäuseelementen angordnet.

In weiterer Ausgestaltung der Erfindung ist die Dichtung nach Anspruch 5 im Bereich der gemeinsamen Teilungsebene von einem etwa stirnseitig angeordneten, umlaufenden Vorsprung oder dergleichen, der gegebenenfalls mit einer korrespondierenden Ausnehmung oder dergleichen zusammenwirkt, wenigstens teilweise abdeckbar. Damit ist die Dichtung zumindest teilweise nicht direkt dem Regenschlag und/oder korrosivem Schmutz, wie Taubenkot etc., ausgesetzt.

Darüber hinaus liegt es alternativ im Rahmen der Erfindung, das transparente Sichtprofil des Gehäuses nach Anspruch 6 auch unmittelbar über wenigstens ein Scharnier oder dergleichen Gelenkverbindung relativ zu den den Rahmen bildenden Gehäuseelementen verschwenkbar auszubilden, wobei das transparente Sichtprofil über die Innenfläche im randseitigen Bereich an dem umlaufenden Anschlag oder dergleichen Vorsprung abstützbar ist. Das wenigstens eine Scharnier oder dergleichen Gelenkverbindung ist direkt an dem transparenten Sichtprofil befestigt. So wird das transparente Sichtprofil und damit einhergehend die Sichtfläche wiederum bis an die Innenseiten der den Rahmen bildenden Gehäuseelemente vergrößert. Der sichtbare Rahmen wird demgegenüber im wesentlichen auf die Dickenabmessung der den Rahmen bildenden Gehäuseelemente, zum Beispiel von kleiner bzw. gleich 15 mm, reduziert. Bei dieser Ausführungsform eines erfindungsgemäßen Gehäuses kommt jedoch noch ein Luftspalt hinzu, der zur Freigängigkeit für das transparente Sichtprofil zu dessen Verschwenkbarkeit auf der Seite des wenigstens einen Scharnieres erforderlich ist.

In vorteilhafter Weise erfolgt in diesem Zusammenhang nach Anspruch 7 eine Abdichtung zwischen den den Rahmen bildenden Gehäuseelementen und dem transparenten Sichtprofil durch eine Dichtung, die an dem umlaufenden Anschlag oder dergleichen Vorsprung angeordnet ist. Da die den Rahmen bildenden Gehäuseelemente stirnseitig mit der Außenfläche des transparenten Sichtprofiles im wesentlichen bündig abschließen oder sogar geringfügig darüber vorstehen, ist die Dichtung keinem direkten Schlagregen ausgesetzt und bleibt im übrigen vor korrosivem Schmutz, wie Taubenkot etc., verschont. Die im Inneren liegende Dichtung ist somit gegen äußere Witterungseinflüsse geschützt und weist eine hohe Lebensdauer auf.

Vorzugsweise sind die relativ zueinander verschwenkbar ausgebildeten, den Rahmen bildenden Gehäuseelemente bzw. ist das relativ zu den den Rahmen bildenden Gehäuseelementen verschwenkbar ausgebildete transparente Sichtprofil nach Anspruch 8 durch wenigstens einen Verschluß oder dergleichen arretierbar.

Des weiteren liegt es im Rahmen der Erfindung, das transparente Sichtprofil nach Anspruch 9 als Glasscheibe oder dergleichen auszubilden.

Entsprechend den Maßnahmen nach den Ansprüchen 10 und 11 ist das transparente Sichtprofil schließlich noch zweckmäßigerweise selbsttragend ausgebildet bzw. aus schlagfestem bzw. schlagunempfindlichem Material gebildet.

Weitere Merkmale, Vorteile und Einzelheiten der Erfindung ergeben sich aus der nachfolgenden Beschreibung einiger bevorzugter Ausführungsformen der Erfindung sowie anhand der Zeichnungen. Hierbei zeigen:
- Fig. 1: eine schematische, perspektivische Vorderansicht einer Ausführungsform eines erfindungsgemäßen Gehäuses,
- Fig. 2: eine teilweise abgebrochene Querschnittsansicht durch die Ausführungsform des erfindungsgemäßen Gehäuses entsprechend Ausschnitt II in der Fig. 1 in vergrößerter Darstellung,
- Fig. 3: eine teilweise abgebrochene Querschnittsansicht durch die Ausführungsform des erfindungsgemäßen Gehäuses entsprechend Ausschnitt III in der Fig. 1 in vergrößerter Darstellung,
- Fig. 4: eine schematische, perspektivische Vorderansicht einer anderen Ausführungsform eines erfindungsgemäßen Gehäuses, und
- Fig. 5: eine teilweise abgebrochene Querschnittsansicht durch die Ausführungsform des erfindungsgemäßen Gehäuses entsprechend Ausschnitt V in der Fig. 4.

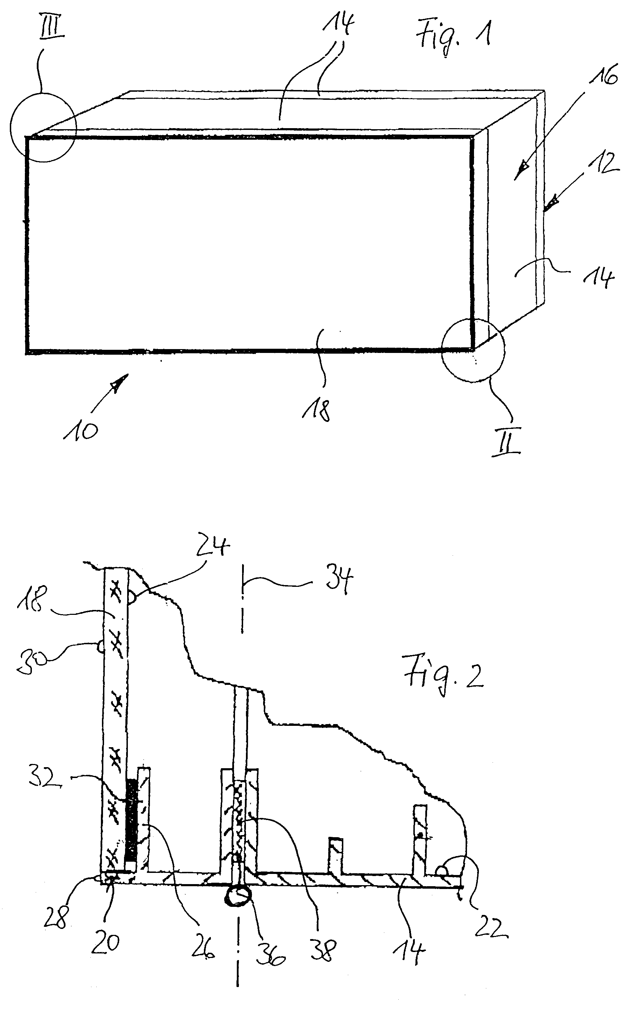

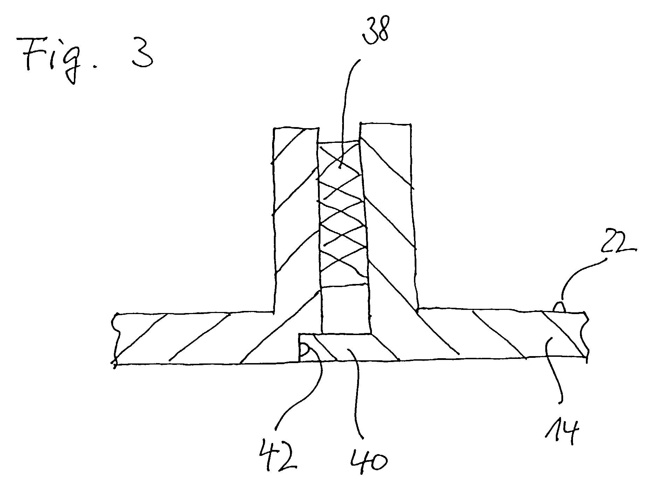

In den Fig. 1 und 2 ist auf schematische Weise eine Ausführungsform eines erfindungsgemäßen Gehäuses 10 oder dergleichen, insbesondere zur Aufnahme einer Displayanordnung zum Anzeigen von Informationen (nicht dargestellt), gezeigt.

Das Gehäuse 10 umfaßt einen Gehäusekörper 12, in welchem die Displayanordnung untergebracht ist. Der Gehäusekörper 12 ist aus mehreren Gehäuseelementen 14 zusammengesetzt, nämlich aus einer oberen und einer unteren Wand und zwei Seitenwänden, die einen bei diesem Ausführungsbeispiel etwa rechteckigen Rahmen 16 oder dergleichen bilden. Zusätzlich umfaßt der Gehäusekörper 12 rückseitig noch ein Gehäuseelement 14 in Form einer Rückwand oder dergleichen.

Darüber hinaus weist das Gehäuse 10 nach der Erfindung wenigstens ein transparentes Sichtprofil 18 auf, welchem eine für einen Betrachter von außen sichtbare Anzeigeeinrichtung (ebenfalls nicht dargestellt) der Displayanordnung zugewandt ist. Das transparente Sichtprofil 18 ist als Glasscheibe oder dergleichen ausgebildet, die zur Erhöhung der Stabilität gegebenenfalls selbsttragend ausgebildet ist und/oder gegen äußere Manipulationen vorzugsweise aus schlagfestem bzw. schlagunempfindlichem Material gebildet ist.

Wie insbesondere aus der Fig. 2 deutlich hervorgeht, besitzt das transparente Sichtprofil 18 Außenabmessungen, welche in Form und Größe im wesentlichen an die Innenabmessungen von den Gehäuseelementen 14, die den Rahmen 16 oder dergleichen bilden, angepaßt sind. Somit reicht das transparente Sichtprofil 18 mit dessen Stirnseiten 20 bis nahe an die Innenseiten 22 der den Rahmen 16 bildenden Gehäuseelemente 14 heran oder kommt mit diesen sogar in Berührung.

Das transparente Sichtprofil 18 ist über seine Innenfläche 24, welche der Anzeigeeinrichtung der Displayanordnung zugewandt ist, an einem Anschlag 26 oder dergleichen Vorsprung abgestützt. Der Anschlag 26 oder dergleichen Vorsprung ist bei dieser Ausführungsform durchgehend bzw. umlaufend ausgebildet und erstreckt sich von den Innenseiten 22 der den Rahmen 16 bildenden Gehäuseelemente 14 weg etwa senkrecht in das Innere des Gehäusekörpers 12. Der Anschlag 26 oder dergleichen Vorsprung verläuft daher im wesentlichen parallel zu dem transparenten Sichtprofil 18.

Weiterhin ist der Anschlag 26 oder dergleichen Vorsprung aus der zur Blattebene senkrechten Ebene des transparenten Sichtprofiles 18 in das Innere des Gehäusekörpers 12 zurückversetzt, derart, daß die Stirnseiten 28 der den Rahmen 16 bildenden Gehäuseelemente 14 mit der Außenfläche 30 des transparenten Sichtprofiles 18, welche der Anzeigeeinrichtung der Displayanordnung abgewandt ist, im wesentlichen bündig abschließen. Ebenso ist es jedoch auch möglich, daß die Stirnseiten 28 geringfügig über die Außenfläche 30, welche der Anzeigeeinrichtung der Displayanordnung abgewandt ist, vorstehen.

Auf diese Weise ist zugleich sichergestellt, daß das transparente Sichtprofil 18 vollständig in den den Rahmen 16 bildenden Gehäuseelementen 14 eingelassen ist und die Stirnseiten 20 des transparenten Sichtprofiles 18 von den Gehäuseelementen 14 vollständig abgedeckt sind. Eine Beschädigung des transparenten Sichtprofiles 18 durch äußere Schlageinwirkung oder dergleichen auf dessen Stirnseiten 20 ist somit ausgeschlossen.

Das transparente Sichtprofil 18 ist über seine Innenfläche 24 im randseitigen Bereich an dem durchgehenden bzw. umlaufenden Anschlag 26 oder dergleichen Vorsprung mittels Verklebung befestigbar. An dem Anschlag 26 oder dergleichen Vorsprung ist daher ein Klebstoff 32, beispielsweise ein Klebstreifen, aufgebracht, an welchem die Innenfläche 24 des transparenten Sichtprofiles 18 im randseitigen Bereich (an-)haftet. Durch eine solche Verklebung übernimmt das transparente Sichtprofil 18 selbst eine bestimmte Tragefunktion, mit dem Ergebnis, daß die den Rahmen 16 bildenden Gehäuseelemente 14 enlastet werden. Das transparente Sichtprofil 18 und damit die auszunutzende Sichtfläche können bei dem erfindungsgemäßen Gehäuse 10 folglich größstmöglich dimensioniert werden.

Zu Montage-, Reparatur-, Wartungs- oder Reinigungszwecken etc. ist das transparente Sichtprofil 18 des Gehäuses 10 nach der Erfindung an den den Rahmen 16 bildenden Gehäuseelementen 14 verschwenkbar angeordnet.

Bei der in den Fig. 1 und 2 dargestellten Ausführungsform des Gehäuses 10 sind die den Rahmen 16 bildenden Gehäuseelemente 14 in einer gemeinsamen, zur Blattebene senkrechten Teilungsebene 34 zweigeteilt ausgebildet. Die gemeinsame Teilungsebene 34 ist etwa senkrecht zu den Gehäuseelementen 14 und benachbart zu dem transparenten Sichtprofil 18 angeordnet.

Über ein oder mehrere Scharniere 36 oder dergleichen Gelenkverbindung sind die zweigeteilten, den Rahmen 16 bildenden Gehäuseelemente 14 relativ zueinander verschwenkbar ausgebildet.

Eine Dichtung 38 ist in der gemeinsamen Teilungsebene 34 zwischen den zweigeteilten, den Rahmen 16 bildenden Gehäuseelementen 14 angeordnet.

Zum zumindest teilweisen Schutz gegen Schlagregen bzw. korrosiven Schmutz, wie zum Beispiel Taubenkot, ist die Dichtung 38 entsprechend der Fig. 3 im Bereich der gemeinsamen Teilungsebene 34 von einem etwa stirnseitig angeordneten, umlaufenden Vorsprung 40 oder dergleichen, der gegebenenfalls mit einer korrespondierenden Ausnehmung 42 oder dergleichen zusammenwirkt, abdeckbar. Es versteht sich, daß der Vorsprung 40 und die Ausnehmung 42 im Bereich des Gehäuseelementes 14, welchem das bzw. die Scharniere 36 oder dergleichen Gelenkverbindung zugeordnet ist/sind, gegebenenfalls modifiziert werden oder sogar gänzlich entfallen muß, um die Freigängigkeit der relativ zueinander verschwenkbar ausgebildeten, den Rahmen 16 bildenden Gehäuseelemente 14 sicherzustellen. Dem damit zwangsläufig verbundenen Nachteil einer freien Zugänglichkeit der Dichtung 38 kann aber dadurch begegnet werden, indem das bzw. die Scharniere 36 oder dergleichen Gelenkverbindung beispielsweise an dem Gehäuseelement 14, das der unteren Wand entspricht, vorgesehen sind.

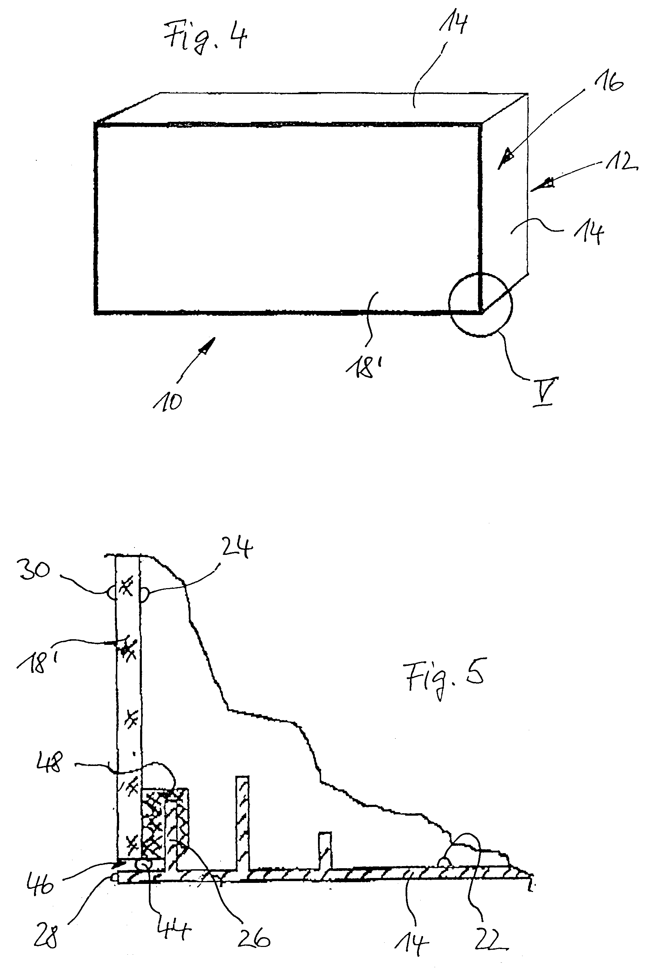

In den Fig. 4 und 5 ist schließlich noch eine weitere Ausführungsform eines erfindungsgemäßen Gehäuses 10 dargestellt, wobei zu der vorhergehenden Ausführungsform nach den Fig. 1 bis 3 übereinstimmende Merkmale mit identischen Bezugsziffern versehen sind.

Die Ausführungsform des erfindungsgemäßen Gehäuses 10 nach den Fig. 4 und 5 unterscheidet sich von derjenigen nach den Fig. 1 bis 3 im wesentlichen dadurch, daß das transparente sichtprofil 18' selbst über wenigstens ein Scharnier 44 oder dergleichen Gelenkverbindung relativ zu den den Rahmen 16 bildenden Gehäuseelementen 14 verschwenkbar ausgebildet ist. Das wenigstens eine Scharnier 44 ist auf herkömmliche Weise direkt an dem transparenten Sichtprofil 18' befestigt. Die eigentliche Halterung des transparenten Sichtprofiles 18' erfolgt mithin über das oder die Scharniere 44.

Auf diese Weise kann das transparente Sichtprofil 18' und damit einhergehend die Sichtfläche wiederum bis an die Innenseiten 22 der den Rahmen 16 bildenden Gehäuseelemente 14 vergrößert werden. Der sichtbare Rahmen 16 wird demgegenüber im wesentlichen auf die Dickenabmessung der den Rahmen 16 bildenden Gehäuseelemente 14, zum Beispiel von kleiner bzw. gleich 15 mm, reduziert. Bei dieser Ausführungsform eines erfindungsgemäßen Gehäuses 10 ist jedoch auf der Seite des wenigstens einen Scharnieres 44 zusätzlich noch ein Luftspalt 46 vorgesehen, um die Freigängigkeit des transparenten Sichtprofiles 18' zu dessen Verschwenkbarkeit zu ermöglichen.

Das transparente Sichtprofil 18' ist bei der in den Fig. 4 und 5 gezeigten Ausführungsform über die Innenfläche 24 des transparenten Sichtprofiles 18' im randseitigen Bereich an dem umlaufenden Anschlag 26 oder dergleichen Vorsprung abstützbar. An dem umlaufenden Anschlag 26 oder dergleichen Vorsprung ist eine Dichtung 48 angeordnet. Da die Stirnseiten 28 der den Rahmen 16 bildenden Gehäuseelemente 14 mit der Außenfläche 30 des transparenten Sichtprofiles 18' im wesentlichen bündig abschließen oder sogar geringfügig darüber vorstehen, ist die Dichtung 48 keinem direkten Schlagregen ausgesetzt und bleibt im übrigen vor korrosivem Schmutz, wie Taubenkot etc., verschont. Die sich im Inneren des Gehäusekörpers 12 befindende Dichtung 48 ist somit gegen äußere Witterungseinflüsse geschützt.

Ohne im einzelnen in den Zeichnungen dargestellt zu sein, umfassen die beiden Ausführungsformen des erfindungsgemäßen Gehäuses 10 nach den Fig. 1 bis 3 bzw. nach den Fig. 4 und 5 jeweils mindestens einen Verschluß oder dergleichen, durch welchen die relativ zueinander verschwenkbar ausgebildeten, den Rahmen 16 bildenden Gehäuseelemente 14 bzw. das relativ dazu verschwenkbar ausgebildete transparente Sichtprofil 18' arretiert und gegen eine unbefugte Öffnung verschlossen werden können. Der mindestens eine Verschluß oder dergleichen ist dabei auf bekannte Weise an den relativ zueinander verschwenkbaren Gehäuseelementen 14 bzw. dem transparenten Sichtprofil 18 befestigt.

Das Gehäuse gemäß der Erfindung ist nicht auf die dargestellten Ausführungsformen beschränkt. So ist es ebenfalls denkbar, den Gehäusekörper 14 rückseitig anstelle des Gehäuseelementes 14 in Form einer Rückwand mit einem weiteren transparenten Sichtprofil zu versehen. Auch ist es möglich, jedes andere Gehäuseelement zusätzlich durch ein oder mehrere weitere transparente Sichtprofile zu ersetzen. Schließlich ist es auch ohne weiteres möglich, das erfindungsgemäße Gehäuse unter entsprechender Anordnung der Gehäuseelemente und Anpassung des transparenten Sichtprofiles dreieckig, quadratisch, polyedrisch oder in jeder anderen beliebigen Form auszugestalten.

### Bezugszeichenliste

- 10: Gehäuse
- 12: Gehäusekörper
- 14: Gehäuseelemente
- 16: Rahmen
- 18, 18': transparentes Sichtprofil
- 20: Stirnseiten des transparenten Sichtprofiles
- 22: Innenseiten der Gehäuseelemente
- 24: Innenfläche des transparenten Sichtprofiles
- 26: Anschlag oder dergleichen Vorsprung
- 28: Stirnseiten der Gehäuseelemente
- 30: Außenfläche des transparenten Sichtprofiles
- 32: Klebstoff
- 34: Teilungsebene
- 36: Scharnier
- 38: Dichtung
- 40: Vorsprung
- 42: Ausnehmung
- 44: Scharnier
- 46: Luftspalt
- 48: Dichtung

## Patentansprüche

1. Gehäuse oder dergleichen, insbesondere zur Aufnahme einer Displayanordnung zum Anzeigen von Informationen, mit einem aus mehreren Gehäuseelementen (14) gebildeten Gehäusekörper (12), in welchem die Displayanordnung aufnehmbar ist, und wenigstens einem transparenten Sichtprofil (18, 18'), welchem eine für einen Betrachter von außen sichtbare Anzeigeeinrichtung der Displayanordnung zugewandt ist, wobei das transparente Sichtprofil (18, 18') Außenabmessungen aufweist, welche in Form und Größe im wesentlichen an Innenabmessungen von einen Rahmen (16) oder dergleichen bildenden Gehäuseelementen (14) des Gehäusekörpers (12) angepaßt sind, und über die der Anzeigeeinrichtung der Displayanordnung zugewandte Innenfläche (24) an einem insbesondere durchgehenden Anschlag (26) oder dergleichen Vorsprung, der sich von den Innenseiten (22) der den Rahmen (16) bildenden Gehäuseelemente (14) wegerstreckt, abstützbar gehalten ist, derart, daß die Stirnseiten (28) der den Rahmen (16) bildenden Gehäuseelemente (14) mit der der Anzeigeeinrichtung der Displayanordnung abgewandten Außenfläche (30) des transparenten Sichtprofiles (18, 18') im wesentlichen bündig abschließen oder geringfügig über die der Anzeigeeinrichtung der Displayanordnung abgewandte Außenfläche (30) vorstehen.

2. Gehäuse nach Anspruch 1, dadurch gekennzeichnet, daß das transparente Sichtprofil (18, 18') an den den Rahmen (16) bildenden Gehäuseelementen (14) verschwenkbar angeordnet ist.

3. Gehäuse nach Anspruch 2, dadurch gekennzeichnet, daß die den Rahmen (16) bildenden Gehäuseelemente (14) in einer gemeinsamen Teilungsebene (34) etwa senkrecht zu den Gehäuseelementen (14) und benachbart zu dem transparenten Sichtprofil (18) zweigeteilt und über wenigstens ein Scharnier (36) oder dergleichen Gelenkverbindung relativ zueinander verschwenkbar ausgebildet sind, wobei das transparente Sichtprofil (18) über die Innenfläche (24) im randseitigen Bereich an dem umlaufenden Anschlag (26) oder dergleichen Vorsprung mittels Verklebung befestigbar ist.

4. Gehäuse nach Anspruch 3, dadurch gekennzeichnet, daß eine Dichtung (38) in der gemeinsamen Teilungsebene (34) zwischen den zweigeteilten, den Rahmen (16) bildenden Gehäuseelementen (14) angordnet ist.

5. Gehäuse nach Anspruch 4, dadurch gekennzeichnet, daß die Dichtung (38) im Bereich der gemeinsamen Teilungsebene (34) von einem etwa stirnseitig angeordneten, umlaufenden Vorsprung (40) oder dergleichen, der gegebenenfalls mit einer korrespondierenden Ausnehmung (42) oder dergleichen zusammenwirkt, wenigstens teilweise abdeckbar ist.

6. Gehäuse nach Anspruch 2, dadurch gekennzeichnet, daß das transparente Sichtprofil (18') über wenigstens ein Scharnier (44) oder dergleichen Gelenkverbindung relativ zu den den Rahmen (16) bildenden Gehäuseelementen (14) verschwenkbar ausgebildet ist, wobei das transparente Sichtprofil (18') über die Innenfläche (24) im randseitigen Bereich an dem umlaufenden Anschlag (26) oder dergleichen Vorsprung abstützbar ist.

7. Gehäuse nach Anspruch 6, dadurch gekennzeichnet, daß eine Dichtung (48) an dem umlaufenden Anschlag (26) oder dergleichen Vorsprung angeordnet ist.

8. Gehäuse nach einem der Ansprüche 2 bis 7, dadurch gekennzeichnet, daß die relativ zueinander verschwenkbar ausgebildeten, den Rahmen (16) bildenden Gehäuseelemente (14) bzw. das relativ zu den den Rahmen (16) bildenden Gehäuseelementen (14) verschwenkbar ausgebildete transparente Sichtprofil (18') durch wenigstens einen Verschluß oder dergleichen arretierbar sind bzw. ist.

9. Gehäuse nach einem der Ansprüche 1 bis 8, dadurch gekennzeichnet, daß das transparente Sichtprofil (18, 18') als Glasscheibe oder dergleichen ausgebildet ist.

10. Gehäuse nach einem der Ansprüche 1 bis 9, dadurch gekennzeichnet, daß das transparente Sichtprofil (18, 18') selbsttragend ausgebildet ist.

11. Gehäuse nach einem der Ansprüche 1 bis 10, dadurch gekennzeichnet, daß das transparente Sichtprofil (18, 18') aus schlagfestem bzw. schlagunempfindlichem Material gebildet ist.
